# FASCICULE DE BREVET EUROPEEN

(11) **EP 1 388 098 B1**
(45) Date de publication et mention de la délivrance du brevet: **22.04.2009**
(21) Numéro de dépôt: 01934073.6
(22) Date de dépôt: 10.05.2001
(51) Int. Cl.: G06Q 30/00

(54) **PROCEDE ET SYSTEME DE DIFFUSION DE MESSAGES PERMETTANT DE GARANTIR LA PRISE DE CONNAISSANCE AU MOINS PARTIELLE D'UN MESSAGE PAR SON DESTINATAIRE**
NACHRICHTENVERTEILUNGSVERFAHREN UND -SYSTEM, WELCHES DEM EMPFÄNGER GARANTIERT, WENIGSTENS TEILWEISE ÜBER EINE NACHRICHT INFORMIERT ZU WERDEN
METHOD AND DEVICE FOR MESSAGE BROADCASTING ENABLING THE RECIPIENT TO RETRIEVE AT LEAST PARTLY A MESSAGE

(43) Date de publication de la demande: 11.02.2004
(73) Titulaire: Strub, Daniel, 78300 Poissy (FR)
(72) Inventeur: Strub, Daniel, 78300 Poissy (FR)
(74) Mandataire: Laget, Jean-Loup
(86) Numéro de dépôt international: PCT/FR2001/001407
(87) Numéro de publication internationale: WO 2002/091253

(56) Documents cités:
- EP-A- 0 698 985
- WO-A-00/55781
- US-A- 4 785 473
- US-A- 5 721 827
- US-A- 5 796 394

## Description

La présente invention se rapporte de façon générale aux procédés et aux systèmes automatisés de diffusion de messages, et plus particulièrement à un procédé et à un système de diffusion de messages à caractère publicitaire qui permettent de garantir à un annonceur la prise de connaissance au moins partielle d'un message publicitaire par les destinataires auxquels le message aura été envoyé.

Les techniques de communication de messages à caractère publicitaire ont évolué des techniques d'affichage et d'inserts dans la presse écrite des siècles précédents jusqu'aux techniques actuelles de diffusion dans des médias télévisuels, télématiques ou de type Internet, en passant par les techniques de communication à base de messages vocaux sur des terminaux de télécommunication fixes ou mobiles.

Les techniques traditionnelles de diffusion de messages publicitaires purement visuelles telles que la communication par voie d'affichage ou d'inserts dans la presse écrite présentent les inconvénients bien connus que les destinataires potentiels de ces messages publicitaires peuvent les ignorer simplement en détournant le regard des affiches ou des inserts publicitaires.

De même, des communications sous forme textuelle telles que des messages de type SMS transmis sur un récepteur radio téléphonique ou des publicités sur des pages télématiques ou de type Internet peuvent être facilement ignorées par leurs destinataires potentiels pour les mêmes raisons.

Pour répondre à ce problème, il est de nos jours de plus en plus fait appel à des techniques de diffusion de messages publicitaires par voie sonore, éventuellement combinées à des techniques visuelles, qui présentent l'intérêt que le destinataire potentiel ne peut pas éviter d'entendre un message publicitaire sous forme sonore.

Toutefois, le destinataire d'un message publicitaire peut toujours s'éloigner physiquement du dispositif de diffusion de messages, ou ne pas prêter attention aux messages publicitaires.

Pour contourner ce problème, des techniques de diffusion de messages publicitaires par voie téléphonique ont été développées, telles que celles décrite dans le document WO 98/49826, dans laquelle les messages à caractère publicitaire sont insérés dans des communications téléphoniques entre deux usagers, en contrepartie d'une gratuité partielle ou totale des communications téléphoniques concernées.

Cette technique est très contraignant, voire difficilement supportable par les deux usagers en communication, en particulier pour celui des usagers qui ne bénéficie pas de la remise sur les communications téléphoniques, et en conséquence, elle n'a pas connu le succès escompté. En outre, cette technique peut présenter des inconvénients sérieux, voire graves, dans le cas où la communication téléphonique a lieu dans une situation d'urgence médicale ou autre, où une interruption publicitaire, même momentanée, peut être très lourde de conséquences.

De même, on connaît par le document FR 2 798 801 une technique permettant de stocker des messages publicitaires d'un annonceur sur un serveur de messagerie vocale, un utilisateur pouvant choisir et consulter un message, ignorer un message ou utiliser un message pour accéder à un service. Toutefois, ce type de technique présente l'inconvénient qu'il n'existe aucun moyen pour l'annonceur de s'assurer qu'au moins une partie significative de son message publicitaire aura été entendu par l'utilisateur avant la suppression du message concerné par ce dernier.

Cet état de fait à pour effet de rendre incertain pour un annonceur le retour sur investissement dans des campagnes publicitaires basées sur ce type de support dans le cadre de la technique antérieure. En particulier, dans le cas de messages publicitaires envoyés en contrepartie d'une gratuité partielle ou totale de communications téléphoniques, l'annonceur se retrouvera nécessairement perdant si les destinataires peuvent se passer d'écouter les messages publicitaires constituant la contrepartie de la gratuité partielle ou totale de leur abonnement.

Par ailleurs, dans un tout autre domaine, il y peut être essentiel de s'assurer que le destinataire d'un message en a bien pris connaissance. Ainsi, dans le cas de la conduite de processus industriels ou d'engins tels que des aéronefs, les opérateurs humains concernés sont fréquemment sollicités par des messages de toute nature en provenance du système automatisé, et leur faculté d'attention tend par conséquent à s'émousser. Cela a pour conséquence que ces opérateurs risquent de réagir de façon machinale ou distraite à un message reçu du système dont ils ont la charge. De ce fait, il existe une probabilité non négligeable pour que le contenu d'un message urgent, voie vital, ne soit pas effectivement pris en compte par l'opérateur concerné, si une technique appropriée n'est pas mise en oeuvre pour s'assurer que ce dernier a bien pris connaissance au moins d'une partie significative du contenu d'un tel message.

Il existe donc par conséquent un besoin pour un procédé et un système qui permettent d'assurer que le destinataire d'un message a bien pris connaissance au moins d'une partie significative du contenu du message.

La présente invention a donc pour objet de proposer un procédé interactif de restitution de messages dans un système automatisé de diffusion de messages, ledit système automatisé de diffusion de messages comportant au moins un système de stockage de messages stockant des messages et un dispositif de restitution de messages, ledit système de stockage de messages pouvant transmettre des messages stockés au dit dispositif de restitution de messages, ledit dispositif de restitution de messages permettant la restitution en temps réel à un opérateur des messages transmis par ledit système de stockage de messages, ledit système de stockage de messages pouvant effectuer un certain nombre d'opérations sur un message en cours de transmission, ledit dispositif de restitution de messages pouvant transmettre au dit système de stockage de messages au moins un signal de commande sous le contrôle dudit opérateur pendant la transmission d'un message, chacun desdits au moins un signaux de commande permettant de commander au dit système de stockage de messages d'effectuer sur ledit message en cours de transmission une opération correspondante parmi lesdites opérations, ledit dispositif de restitution de messages comportant un moins un dispositif de commande permettant au dit opérateur de générer lesdits au moins un signaux de commande à destination dudit système de stockage de messages, caractérisé en ce que ledit procédé comporte une étape pour tester si le message en cours de transmission est un message privé ou un message publicitaire ou urgent, et en ce que ledit système de stockage de messages (10) stocke en outre pour chaque message publicitaire ou urgent stocké une information représentative de la durée d'un délai minium pour ledit message publicitaire ou urgent et n'accepte d'effectuer lesdites opérations sur ledit message publicitaire ou urgent en cours de transmission qu'après l'expiration dudit délai minimum à partir du début de la transmission dudit message publicitaire ou urgent audit dispositif de restitution de messages (13) et dans lequel au moins un desdits signaux de commande commandant audit système de stockage de messages d'effectuer au moins une desdites opérations sur ledit message publicitaire ou urgent en cours de transmission est déterminé en temps réel par ledit système de stockage de messages (10) et est transmis en temps réel par ledit système de stockage de messages (10) audit opérateur (15) via ledit dispositif de restitution de messages (13), dans lequel ledit au moins un desdits signaux de commande comprend, pour ledit message publicitaire ou urgent en cours de transmission, un signal d'accusé de réception, choisi de façon aléatoire par ledit système de stockage de messages, et transmis une fois le délai minimum écoulé, et dans lequel ledit système de stockage de messages (10) ignore les opérations autres que ledit accusé de réception dudit message publicitaire ou urgent en cours de transmission jusqu'à la réception dudit accusé de réception.

Dans ce procédé, ledit système de stockage de messages et ledit dispositif de restitution de messages peuvent communiquer via un canal de communication. Dans ce cas, ledit canal de communication peut être une liaison radio et ledit dispositif de restitution de messages est alors un terminal de radiocommunication. De même, ledit canal de communication peut être une liaison téléphonique filaire et ledit dispositif de restitution de messages est alors un poste téléphonique conventionnel. Ledit canal de communication peut aussi être une liaison télématique et ledit dispositif de restitution de messages est alors un terminal de communication télématique. Egalement, ledit canal de communication peut être une liaison de télévision interactive et ledit dispositif de restitution de messages est alors un récepteur de télévision interactif. Ledit canal de communication peut être encore un réseau informatique et ledit dispositif de restitution de messages est alors un système informatique connecté au dit réseau informatique.

Les messages stockés dans ledit système de stockage de messages et transmis au dit dispositif de restitution de messages peuvent comprendre au moins une partie sonore. Lesdits messages stockés dans ledit système de stockage de messages et transmis au dit dispositif de restitution de messages peuvent également comprendre au moins une partie de message vocal. Dans ce cas, ledit système de stockage de messages, pourra être un serveur de messagerie vocale.

Les messages stockés dans ledit système de stockage de messages et transmis au dit dispositif de restitution de messages peuvent aussi comprendre au moins une partie composée d'un texte, ainsi qu'au moins une image ou un ensemble d'images fixes ou animées. En outre, lesdits messages stockés dans ledit système de stockage de messages et transmis au dit dispositif de restitution de messages peuvent permettre un dialogue interactif avec l'opérateur.

Dans le procédé de l'invention, lesdites opérations pouvant être effectuées sur le message en cours de transmission peuvent comprendre une opération permettant la suppression du message en cours de transmission et d'au moins un autre message en une seule opération.

En outre, ledit système de stockage peut retransmettre au moins partiellement le message en cours de transmission lors de la réception d'une opération autre que l'accusé de réception.

Dans le procédé de l'invention, l'un desdits au moins un dispositifs de commande présents dans ledit dispositif de restitution de messages pour envoyer ledit au moins un signal de commande au dit système de stockage de messages peut être par exemple un clavier ou un dispositif de commande comportant au moins une touche. Dans ce cas, l'un desdits au moins un signaux de commande permettant d'effectuer une opération sur un message en cours de transmission est le signal généré par l'actionnement d'une touche parmi lesdites au moins une touches présentes sur ledit clavier ou ledit dispositif de commande comportant au moins une touche.

De même, l'un desdits au moins un dispositifs de commande présents dans ledit dispositif de restitution de messages pour envoyer ledit au moins un signal de commande au dit système de stockage de messages peut être un microphone, et l'un desdits au moins un signaux de commande permettant d'effectuer une opération sur un message en cours de transmission sera alors une commande vocale entrée par ledit opérateur au moyen dudit microphone et transmise au dit dispositif de stockage par ledit dispositif de diffusion de messages.

Egalement, l'un desdits au moins un dispositifs de commande présents dans ledit dispositif de restitution de messages pour envoyer ledit au moins un signal de commande au dit système de stockage de messages peut être un dispositif de reconnaissance vocale, et l'un desdits au moins un signaux de commande permettant d'effectuer une opération sur un message en cours de transmission sera alors une commande vocale entrée par ledit opérateur au moyen dudit dispositif de reconnaissance vocale.

Dans le procédé selon l'invention, ledit délai minimum peut être, par exemple, de trois secondes.

En général, lesdits messages stockés dans ledit système de stockage de messages et transmis au dit dispositif de restitution de messages seront des messages à caractère publicitaire.

La durée dudit délai minimum pourra être réduite à zéro pour certains messages.

L'invention propose également un système automatisé de diffusion de messages, ledit système automatisé de diffusion de messages comportant au moins un système de stockage de messages stockant des messages et un dispositif de restitution de messages, ledit système de stockage de messages pouvant transmettre des messages stockés au dit dispositif de restitution de messages, ledit dispositif de restitution de messages permettant la restitution en temps réel à un opérateur des messages transmis par ledit système de stockage de messages, ledit système de stockage de messages pouvant effectuer un certain nombre d'opérations sur un message en cours de transmission, ledit dispositif de restitution de messages pouvant transmettre au dit système de stockage de messages au moins un signal de commande sous le contrôle dudit opérateur pendant la transmission d'un message, chacun desdits au moins un signaux de commande permettant de commander au dit système de stockage de messages d'effectuer sur ledit message en cours de transmission une opération correspondante parmi lesdites opérations, ledit dispositif de restitution de messages comportant un moins un dispositif de commande permettant au dit opérateur de générer lesdits au moins un signaux de commande à destination dudit système de stockage de messages, et qui a pour caractéristique le fait qu'il met en oeuvre le procédé ci-dessus.

On va maintenant décrire, à titre d'exemple seulement, deux exemples de réalisation de l'invention en se référant aux figures annexées, dans lesquelles :
- la figure 1 est le schéma fonctionnel d'un système de diffusion de messages vocaux utilisé tant dans la technique antérieure que dans le procédé et le système selon la présente invention ;
- la figure 2 est un organigramme de principe de la diffusion d'un message vocal sur une liaison téléphonique fixe ou radio, tant dans la technique antérieure que dans le cadre de la présente invention ;
- la figure 3 est un organigramme détaillé du pavé 23 de la figure 2 dans le cas de la technique antérieure ;
- la figure 4 est un organigramme détaillé du pavé 23 de la figure 2 dans un exemple de réalisation de la présente invention ; et
- la figure 5 est un organigramme détaillé du pavé 23 de la figure 2 dans un mode de réalisation de la présente invention.

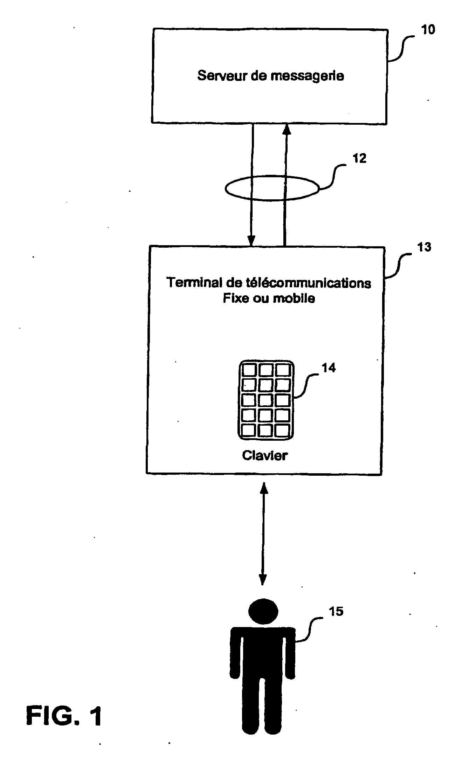

En se référant aux figures 1 à 5, on va maintenant décrire de façon générale la transmission d'un message à caractère publicitaire par un serveur de messagerie vocale, telle que réalisée dans le cadre la technique antérieure ou la présente invention.

Dans le cas de la technique antérieure comme dans le cas de la présente invention, un serveur de messagerie 10 est relié à un terminal de télécommunication fixe ou mobile 13 par une liaison téléphonique fixe ou radio 12, et l'utilisateur 15 interagit avec le terminal de télécommunication fixe ou mobile 13 à l'aide d'un clavier à touches 14.

Lorsque l'utilisateur 15 souhaite prendre connaissance d'éventuels messages stockés à son intention dans le serveur de messagerie 10, il compose sur le clavier 14 le numéro de téléphone correspondant au serveur de messagerie 10.

De façon classique, lors de la réception de l'appel de l'utilisateur 15, le serveur de messagerie 10 identifie l'utilisateur 15 appelant, puis le serveur de messagerie 10 transmet alors les messages en attente pour l'utilisateur 15 ainsi identifié. L'utilisateur 15 peut alors choisir d'interrompre, de conserver, ou de supprimer un message en cours de transmission ou le dernier message transmis. Pour cela, l'opérateur 15 envoie des signaux de commande appropriés au serveur de messagerie 10 à l'aide de touches correspondantes du clavier 14 du terminal de télécommunication fixe ou mobile 13.

Lorsque tous les messages en attente ont été transmis, le serveur 10 informe l'utilisateur 15 qu'il n'y a plus de messages en attente, puis le serveur 10 attend que l'utilisateur 15 mette fin à la communication, ou qu'il effectue d'autres opérations, telles que la consultation de messages précédemment sauvegardés.

Dans la technique antérieure comme dans le cadre de la présente invention, si l'utilisateur 15 met fin à la communication pendant la transmission d'un message, ce dernier est conservé par le serveur de messagerie 10, et il sera présenté à nouveau à l'utilisateur 15 comme s'il n'avait pas commencé à être transmis, lors de la connexion suivante de l'utilisateur 15 au serveur de messagerie 10.

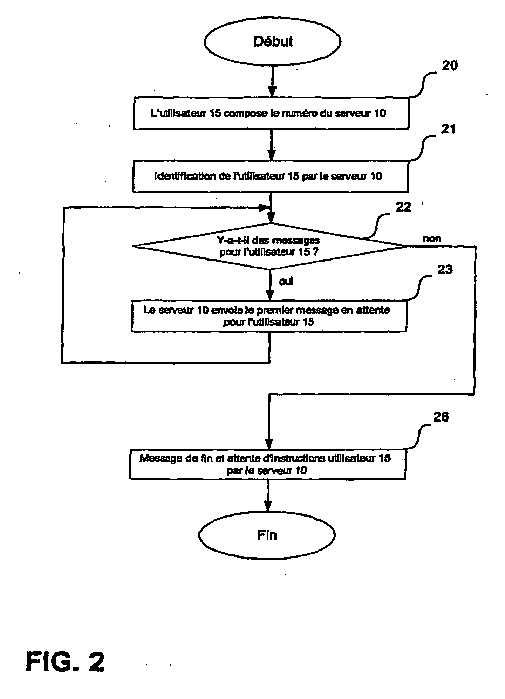

Plus précisément, à l'étape 20 de la figure 2, l'utilisateur 15 compose sur le clavier 14 de son terminal de télécommunication 13 le numéro de téléphone permettant d'accéder au serveur de messagerie 10. Ensuite, à retapé 21, le serveur de messagerie 10 identifie l'utilisateur 15 soit au moyen de son numéro d'appel téléphonique, soit au moyen d'une information interne au terminal de télécommunication 13 tel que le numéro d'une carte à puce (non représentée) présente dans le terminal de télécommunication 13. En variante, l'utilisateur 15 s'identifie en saisissant un code sur le clavier 14 du terminal de télécommunication 13, ce code étant alors transmis au serveur de messagerie 10 par le terminal de télécommunication 13 via la liaison téléphonique 12. Une fois l'étape 21 terminée, le serveur 10 passe à l'étape 22.

À l'étape 22, le serveur de messagerie 10 détermine s'il y a des messages en attente pour l'utilisateur 15 ainsi identifié. Si la réponse est négative, le serveur de messagerie 10 passe à l'étape 26.

A l'étape 26, le serveur 10 indique à l'utilisateur 15 qu'il n'y a plus de messages en attente, et le serveur 10 attend alors les instructions de l'utilisateur 15, telles que la consultation ou la suppression de messages antérieurement sauvegardés, ou que l'utilisateur 15 termine la communication téléphonique.

Si la réponse à l'étape 22 est positive, le serveur de messagerie 10 passe à l'étape 23, dans laquelle le serveur de messagerie 10 transmet à l'opérateur 15 le premier message en attente pour ce dernier, puis le serveur de messagerie 10 retourne à l'étape 22 précédemment décrite.

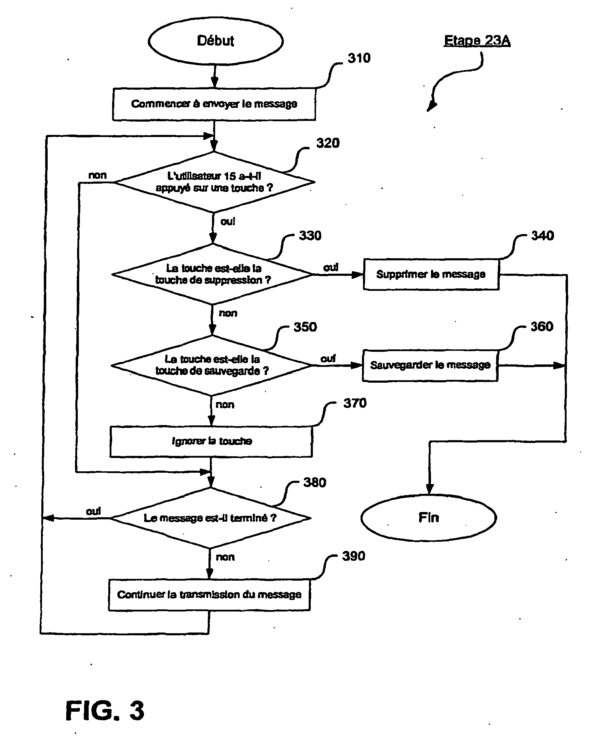

En se référant à la figure 3, on va maintenant décrire en détail l'étape 23 de la figure 2 dans le cas de la technique antérieure, désignée par la référence 23A de la figure 3.

Dans l'étape 310 de la figure 3, le serveur de messagerie 10 commence à envoyer le message en attente pour l'utilisateur 15, puis il passe à l'étape 320.

A l'étape 320, le serveur de messagerie 10 teste si l'utilisateur 15 a appuyé sur une touche du clavier 14 du terminal de télécommunication 13. Si la réponse est négative, le serveur de messagerie 10 passe à l'étape 380 décrite plus loin dans ce document. Si la réponse est positive dans l'étape 320, le serveur de messagerie 10 passe à l'étape 330.

Dans l'étape 330, le serveur de messagerie 10 détermine si la touche que l'utilisateur 15 a pressée est la touche demandant la suppression du message en cours de transmission. Si la réponse est positive, le serveur de messagerie 10 passe à l'étape 340 dans laquelle le serveur 10 supprime le message en cours de transmission de la liste des messages en attente pour l'utilisateur 15, et l'étape 23A de transmission d'un message dans la technique antérieure est terminée.

Si, à l'étape 330, la réponse est négative, le serveur de messagerie 10 passe alors à l'étape 350. Dans l'étape 350, le serveur de messagerie 10 teste si la touche que l'utilisateur 15 a pressée est la touche commandant la sauvegarde du message en cours de transmission. Si la réponse est positive, le serveur de messagerie 10 passe à l'étape 360 où le message en cours de transmission est sauvegardé par le serveur 10, et l'étape 23A de transmission du message est alors terminée.

Si la réponse à l'étape 350 est négative, alors le serveur 10 passe à l'étape 370 où la touche pressée par l'utilisateur 15 est ignorée. Le serveur de messagerie 10 passe alors à l'étape 380.

Dans l'étape 380, le serveur 10 teste si le message en cours de transmission a été entièrement transmis. Si la réponse est positive, le serveur 10 retourne alors à l'étape 320 décrite plus haut. Si la réponse à l'étape 380 est négative, le serveur de messagerie 10 passe à l'étape 390 dans laquelle le serveur de messagerie 10 continue à envoyer le message. Ensuite, le serveur de messagerie 10 retourne à l'étape 320 précédemment décrite.

Dans la description de la figure 3 qui précède, lorsque la transmission du message est terminée, le serveur de messagerie 10 retourne à l'étape 22 de la figure 2.

Ainsi que précédemment mentionné, on constate que, dans la technique antérieure, l'utilisateur 15 peut interrompre à tout instant la transmission d'un message, et par conséquent qu'il n'y a aucune certitude qu'une partie significative du message transmis ait été entendue par le destinataire 15, du fait que, dans la grande majorité des cas, ce dernier interrompra la transmission du message dès qu'il aura déterminé qu'il s'agit d'un message à caractère publicitaire, et non d'un message personnel.

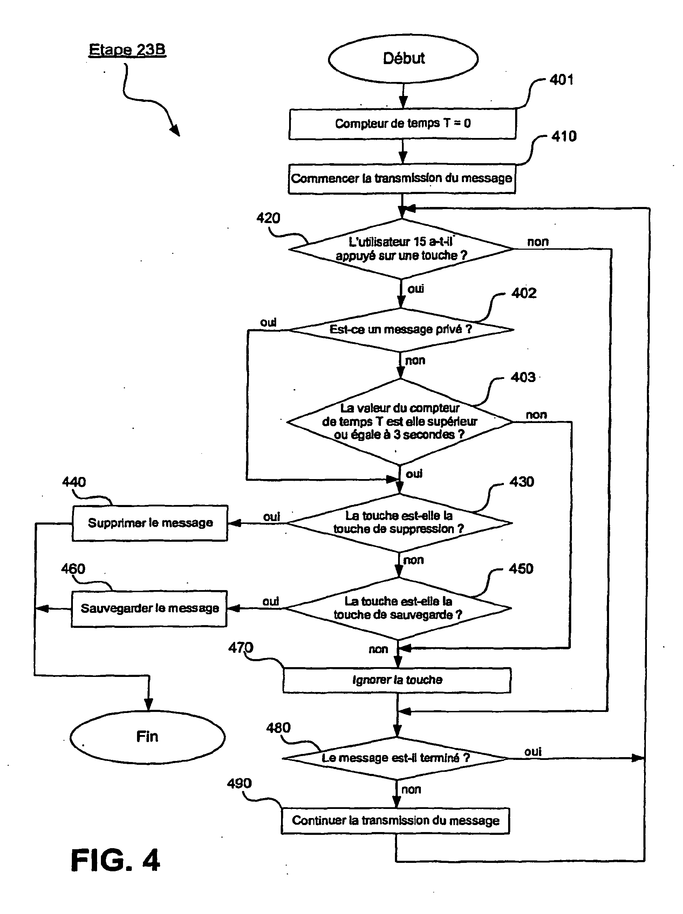

En se référant à la figure 4, on va maintenant décrire en détail l'étape 23 de la figure 2 dans le cadre d'un premier exemple de réalisation de la présente invention, désignée par la référence 23B de la figure 4.

La procédure d'envoi d'un message à l'utilisateur 15 par le serveur 10 commence à l'étape 401. A l'étape 401, le serveur 10 initialise à la valeur 0 un compteur de temps T, destiné à mesurer le temps écoulé depuis le début de la transmission du message. Le serveur 10 passe alors à l'étape 410.

Dans l'étape 410, le serveur de messagerie 10 commence à envoyer le message en attente pour l'utilisateur 15, puis il passe à l'étape 420.

A l'étape 420, le serveur de messagerie 10 teste si l'utilisateur 15 a appuyé sur une touche du clavier 14 du terminal de télécommunication 13. Si la réponse est négative, le serveur de messagerie 10 passe à l'étape 480 décrite plus loin dans ce document. Si la réponse est positive dans l'étape 420, le serveur de messagerie 10 passe à l'étape 402.

Dans l'étape 402, le serveur de messagerie 10 teste si le message en cours de transmission, est un message privé ou un message publicitaire. Si le message en cours de transmission est un message privé, le serveur 10 passe à l'étape 430 qui sera décrite plus loin. Si le message en cours de transmission est un message publicitaire, le serveur 10 passe à l'étape 403.

A l'étape 403, le serveur 10 teste à l'aide du compteur de temps T si le temps qui s'est écoulé depuis le début de la transmission du message est supérieur ou égal à 3 secondes. Si la réponse est négative, c'est-à dire, si le temps écoulé depuis le début de la transmission est inférieur à 3 secondes, le serveur 10 passe à l'étape 470 qui sera décrite plus loin. Si la réponse à l'étape 403 est positive, le serveur 10 passe à l'étape 430.

Dans l'étape 430, le serveur de messagerie 10 détermine si la touche que l'utilisateur 15 a pressée est la touche demandant la suppression du message en cours de transmission. Si la réponse est positive, le serveur de messagerie 10 passe à l'étape 440 dans laquelle le serveur 10 supprime le message en cours de transmission de la liste des messages en attente pour l'utilisateur 15, et l'étape 23B de transmission d'un message dans le cadre du premier mode de réalisation de la présente invention est terminée.

En variante, dans l'étape 440 ci-dessus, si le message en cours de transmission est un message interactif publicitaire comportant plusieurs parties, la touche de suppression peut permettre de supprimer un ou plusieurs messages publicitaires complémentaires en une seule opération de suppression.

Si, à l'étape 430, la réponse est négative, le serveur de messagerie 10 passe alors à l'étape 450. Dans l'étape 450, le serveur de messagerie 10 teste si la touche pressée par l'utilisateur 15 est la touche commandant au serveur 10 de sauvegarder le message en cours de transmission. Si la réponse est positive, le serveur de messagerie 10 passe à l'étape 460 où le message en cours de transmission est sauvegardé par le serveur 10, et l'étape 23B de transmission d'un message dans le cadre du premier mode de réalisation de la présente invention est alors terminée. Si la réponse à l'étape 450 est négative, alors le serveur passe à l'étape 470.

Dans l'étape 470, la touche pressée par l'utilisateur 15 est ignorée, et le serveur de messagerie 10 passe alors à l'étape 480.

Dans l'étape 480, le serveur 10 teste si le message en cours de transmission a été entièrement transmis. Si la réponse est positive, le serveur 10 retourne alors à l'étape 420 décrite plus haut. Si la réponse à l'étape 480 est négative, le serveur de messagerie 10 passe à l'étape 490 dans laquelle le serveur de messagerie 10 continue à envoyer le message. Ensuite, le serveur de messagerie 10 retourne à l'étape 420.

Dans la description de la figure 4 qui précède, lorsque la transmission du message est terminée, le serveur de messagerie 10 retourne à l'étape 22 de la figure 2.

D'après la description précédente en relation avec la figure 4, on voit que, contrairement à ce qui existe dans la technique antérieure, les touches pressées par l'utilisateur 15 avant l'expiration du délai de trois secondes à compter du début de la transmission d'un message publicitaire sont ignorées par le serveur de messagerie 10 grâce au test de l'étape 403. En conséquence, l'utilisateur 15 ne peut pas interrompre la transmission d'un message publicitaire avant l'expiration de ce délai, ce qui entraine que l'utilisateur 15 doit nécessairement entendre au moins les trois premières secondes de tout message publicitaire envoyé par le serveur de messagerie 10.

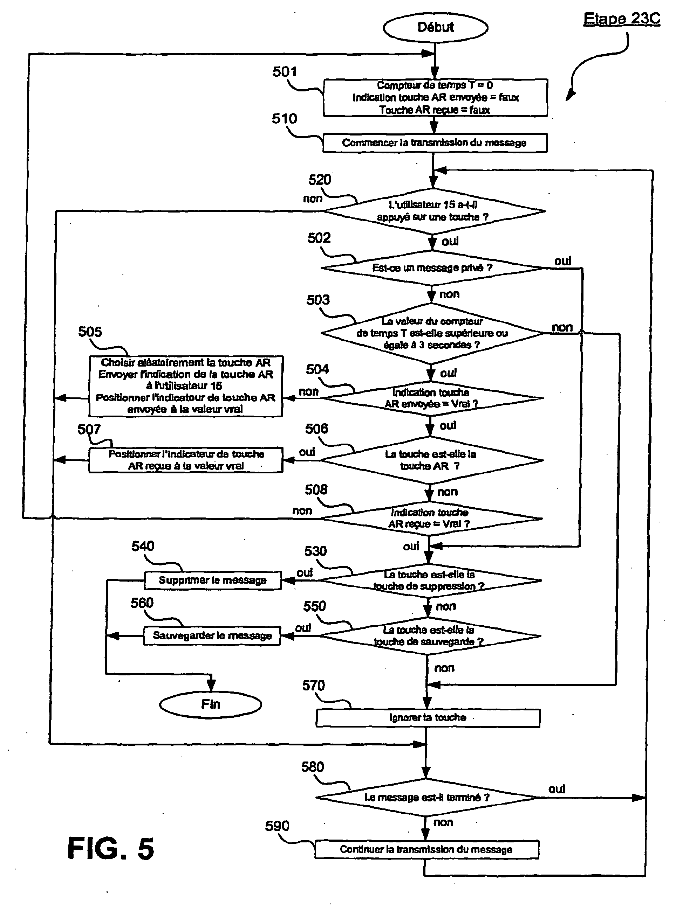

En se référant à la figure 5, on va maintenant décrire en détail l'étape 23 de la figure 2 dans le cadre d'un mode de réalisation de la présente invention, désignée par la référence 23C de la figure 5.

Dans ce mode de réalisation, après avoir envoyé les 3 premières secondes du message vocal, le serveur de messagerie 10 choisit de façon aléatoire une touche du clavier 14 du terminal de télécommunication 13 comme touche d'accusé de réception AR pour le message en cours de transmission, et le serveur de messagerie 10 indique vocalement à l'utilisateur 15, au moyen du terminal de télécommunication 13, quelle est cette touche AR à utiliser. Ensuite, le serveur continue à transmettre le message jusqu'à ce que l'utilisateur 15 appuie sur la touche AR indiquée. Si l'utilisateur 15 appuie sur une touche autre que la touche AR indiquée, le serveur de messagerie 10 reprend la transmission du message depuis le début.

Plus précisément, la procédure d'envoi d'un message à l'utilisateur 15 par le serveur 10 commence à l'étape 501.

A l'étape 501, le serveur 10 initialise à la valeur 0 un compteur de temps T, destiné à mesurer le temps écoulé depuis le début de la transmission du message. Egalement, le serveur 10 initialise à la valeur "faux" un indicateur "Indication touche AR envoyée", qui sert à mémoriser le fait que l'indication de la touche AR a été envoyée à l'utilisateur 15 via le terminal de télécommunication 13. De même, le serveur 10 initialise à la valeur "faux" un indicateur "Touche AR reçue" destiné à mémoriser ie fait que l'utilisateur 15 a pressé la touche AR indiquée.

Le serveur 10 passe alors à l'étape 510. Dans l'étape 510, le serveur de messagerie 10 commence à envoyer le message en attente pour l'utilisateur 15, puis il passe à l'étape 520.

A l'étape 520, le serveur de messagerie 10 teste si l'utilisateur 15 a appuyé sur une touche du clavier 14 du terminal de télécommunication 13. Si la réponse est négative, le serveur de messagerie 10 passe à l'étape 580 décrite plus loin dans ce document Si la réponse est positive à l'étape 520, le serveur de messagerie 10 passe à l'étape 502.

A l'étape 502, le serveur de messagerie 10 teste si le message en cours de transmission est un message privé ou un message publicitaire. Si le serveur 10 détermine que le message en cours de transmission est un message privé, le serveur 10 passe à l'étape 530 qui sera décrite plus loin. Si le serveur 10 détermine que le message en cours de transmission est un message publicitaire, le serveur 10 passe à l'étape 503.

A l'étape 503, le serveur 10 teste à l'aide du compteur de temps T si le temps qui s'est écoulé depuis le début de la transmission du message est supérieur ou égal à 3 secondes. Si la réponse est négative, c'est-à-dire, si le temps écoulé depuis le début de la transmission est inférieur à 3 secondes, le serveur 10 passe à l'étape 570 qui sera décrite plus loin. Si la réponse à l'étape 503 est positive, le serveur 10 passe à l'étape 504.

Dans l'étape 504, le serveur de messagerie 10 teste s'il a déjà choisi la touche AR et envoyé l'indication de la touche AR choisie à l'utilisateur 15. Pour cela, il teste la valeur de l'indicateur "Indication touche AR envoyée" qui a été initialisé à la valeur "faux" à l'étape 501. Si cette valeur est toujours à "faux", le serveur de messagerie 10 passe à l'étape 505.

Dans l'étape 505, le serveur de messagerie 10 choisit de façon aléatoire la touche AR et il indique la touche AR choisie à l'utilisateur 15 au moyen d'un message vocal approprié qu'il envoie au terminal de télécommunication 13. Le serveur 10 initialise alors à la valeur "vrai" l'indicateur "Indication touche AR envoyée". On voit que cet indicateur reflète bien le fait que la touche AR a été choisie et envoyée, puisque cet indicateur n'est mis à la valeur "vrai" que lorsque :
1° / l'indicateur était à la valeur "faux" ;
2°/ la touche AR vient juste d'être choisie et envoyée.

Le serveur de messagerie 10 passe alors à l'étape 580 qui sera décrite plus loin.

Si, à l'étape 504, la réponse est positive, c'est-à-dire que le serveur 10 a déjà choisi la touche AR et envoyé à l'utilisateur 15 l'indication correspondante, puisque l'indicateur "Indication touche AR envoyée" est à la valeur "vrai", alors le serveur 10 passe à l'étape 506. A l'étape 506, le serveur 10 teste si la touche pressée par l'utilisateur 15 est la touche AR précédemment choisie par le serveur 10. Si la réponse est positive, le serveur 10 passe à l'étape 507. Dans l'étape 507, le serveur 10 positionne l'indicateur "Touche AR reçue" à la valeur "vrai", puis il passe à l'étape 580 qui sera décrite plus loin.

Si la réponse à l'étape 506 est négative, c'est-à-dire, si la touche pressée par l'utilisateur 15 est une touche autre que la touche d'AR précédemment choisie par le serveur 10 à étape 505, le serveur 10 passe à l'étape 508. A l'étape 508, le serveur 10 teste si indicateur "Touche AR reçue" a la valeur "vrai". Si la réponse est négative, le serveur 10 retourne à l'étape 501 précédemment décrite, c'est-à-dire qu'il reprend la transmission du message en cours de transmission depuis le début. Si la réponse à l'étape 508 est positive, ce qui signifie que l'indicateur "Touche AR reçue" a été positionne à la valeur "vrai" à l'étape 507 précédemment décrite en résultat de la réception de la touche d'AR choisie par le serveur 10 à l'étape 505, alors le serveur 10 passe à l'étape *530.*

Dans l'étape 530, le serveur de messagerie 10 détermine si la touche que l'utilisateur 15 a pressée est la touche demandant la suppression du message en cours de transmission. Si la réponse est positive, le serveur de messagerie 10 passe à l'étape 540 dans laquelle le serveur 10 supprime le message en cours de transmission de la liste des messages en attente pour l'utilisateur 15, et l'étape 23C de transmission d'un message dans le cadre du mode de réalisation de la présente invention est terminée.

En variante, dans l'étape 540 ci-dessus, si le message en cours de transmission est un message interactif publicitaire comportant plusieurs parties, la touche de suppression peut permettre de supprimer un ou plusieurs messages publicitaires complémentaires en une seule opération de suppression.

Si, à l'étape 530, la réponse est négative, le serveur de messagerie 10 passe alors à l'étape 550. Dans l'étape 550, le serveur de messagerie 10 teste si la touche pressée par l'utilisateur 15 est la touche commandant au serveur 10 de sauvegarder le message en cours de transmission. Si la réponse est positive, le serveur de messagerie 10 passe à l'étape 560 où le message en cours de transmission est sauvegardé par le serveur 10, et l'étape 23C de transmission d'un message dans le cadre du mode de réalisation de la présente invention est alors terminée.

Si la réponse à l'étape 550 est négative, alors le serveur passe à l'étape 570. Dans l'étape 570, la touche pressée par l'utilisateur 15 est ignorée, et le serveur de messagerie 10 passe alors à l'étape 580.

Dans l'étape 580, le serveur 10 teste si le message en cours de transmission a été entièrement transmis. Si la réponse est positive, le serveur 10 retourne alors à l'étape 520 décrite plus haut. Si la réponse à l'étape 580 est négative, le serveur de messagerie 10 passe à l'étape 590 dans laquelle le serveur de messagerie 10 continue à envoyer le message. Ensuite, le serveur de messagerie 10 retourne à l'étape 520.

Dans la description de la figure 5 qui précède, lorsque la transmission du message est terminée, le serveur de messagerie 10 retourne à l'étape 22 de la figure 2.

D'après la description précédente en relation avec la figure 5, on voit que, comme dans l'exemple de réalisation de l'invention et contrairement à ce qui existe dans la technique antérieure, les touches pressées par l'utilisateur 15 avant l'expiration du délai de trois secondes à compter du début de la transmission d'un message publicitaire sont ignorées par le serveur de messagerie 10 grâce au test de l'étape 503. En conséquence, l'utilisateur 15 ne peut pas interrompre la transmission d'un message publicitaire avant l'expiration de ce délai, ce qui entraîne que l'utilisateur 15 doit nécessairement entendre au moins les trois premières secondes de tout message publicitaire envoyé par le serveur de messagerie 10.

En outre, compte-tenu du fait que la touche permettant la suppression du message est choisie et indiquée de façon aléatoire par le serveur de messagerie 10 dans l'étape 505, l'utilisateur 15 aura nécessairement du prêter au début du message une attention suffisante pour noter mentalement la touche de suppression à utiliser, faute de quoi il ne pourra pas effacer le message en cours de transmission, et celui-ci restera dans la liste des messages en attente pour l'utilisateur 15. Cela a pour conséquence que le message sera à nouveau présenté à l'utilisateur 15 la prochaine fois que ce dernier demandera ses messages en attente au serveur de messagerie 10.

En outre, dans ce mode de réalisation, si un utilisateur 15 n'ayant pas écouté le début du message, et ignorant donc la touche AR choisie par le serveur 10, tente de contourner la procédure d'AR ci-dessus décrite en appuyant au hasard sur une ou plusieurs touches du clavier 14, il n'aura qu'une probabilité égale à 1/n, où n est le nombre de touches du clavier 14, de trouver par hasard au premier essai la touche d'AR correcte, c'est-à-dire, celle définie aléatoirement par le serveur 10 à l'étape 505. Dans le cas contraire, c'est-à-dire, si la première touche tapée au hasard par l'utilisateur 15 n'est pas la touche choisie par le serveur 10 à l'étape 505, le serveur 10 retournera à l'étape 501, c'est-à-dire que l'utilisateur 15 devra réécouter depuis le début le message en cours de transmission, et ainsi de suite jusqu'à ce que l'utilisateur 15 ait prêté suffisamment d'attention au début du message pour mémoriser la touche d'effacement indiquée par le serveur 10.

Ainsi, dans cette variante du procédé de l'invention, l'annonceur auteur d'un message publicitaire est-il assuré qu'au minimum les trois premières secondes du message publicitaire auront été entendues par tous les destinataires 15 auxquels le message publicitaire aura été transmis.

Dans ce qui précède, un procédé a été décrit qui permet d'assurer à un annonceur qu'un message publicitaire, transmis par exemple par voie téléphonique, aura été entendu au moins en partie par tous les destinataires auxquels ce message aura été adressé. Ainsi, le procédé précédemment décrit présente la particularité, unique par rapport à la technique antérieure, de garantir à un annonceur publicitaire qu'au moins une partie significative de son message publicitaire aura été effectivement écoutée par les destinataires, ce qui, à son tour, garantit à l'annonceur la pérennité de son investissement dans la campagne publicitaire concernée.

Le procédé de l'invention ne se limite pas au mode de réalisation précédemment décrit. Par exemple, la durée du délai minimum avant suppression d'un message peut être changée dans le cadre de l'invention, et elle peut être rendue variable, en fonction du message associé ou de divers paramètres, tels que le coût facturé à l'annonceur pour la diffusion du message.

De même, des fonctions autres que la suppression ou la sauvegarde d'un message en cours de transmission pourront être réalisées si nécessaire pour les besoins d'une application particulière. Ainsi, comme précédemment indiqué, l'opération de suppression d'un message pourra être, par exemple, une opération combinée permettant la suppression de plusieurs messages publicitaires en une seule opération. Il est également possible de réaliser des fonctions telles la consultation de messages précédemment sauvegardés, ou la consultation interactive d'autres messages à l'aide de touches indiquées dans le message en cours de transmission.

Par ailleurs, le dispositif de commande 14 précédemment décrit permettant à l'utilisateur 15 d'indiquer au serveur 10 les opérations à effectuer sur le message en cours de transmission pourra être tout autre dispositif de commande 14 approprié tel qu'une molette rotative 14 ou un dispositif de commande 14 vocal. Dans ce dernier cas, les actions permettant de générer les signaux de commande appropriés pour le serveur 10 seront des commandes vocales entrées par l'utilisateur 15 via le dispositif de commande vocal 14, qui remplaceront ou se combineront avec les pressions sur les touches du clavier 14.

De façon générale, les personnes compétentes dans la technique pourront apporter diverses modifications ou améliorations au mode de réalisation précédemment décrit sans sortir du cadre de l'invention, seulement limitée par les revendications annexées.

## Revendications

1. Procédé interactif de restitution de messages dans un système automatisé de diffusion de messages, ledit système automatisé de diffusion de messages comportant au moins un système de stockage de messages (10) stockant des messages et un dispositif de restitution de messages (13), ledit système de stockage de messages (10) pouvant transmettre des messages stockés au dit dispositif de restitution de messages (13), ledit dispositif de restitution de messages (13) permettant la restitution en temps réel à un opérateur (15) des messages transmis par ledit système de stockage de messages (10), ledit système de stockage de messages (10) pouvant effectuer un certain nombre d'opérations sur un message en cours de transmission, ledit dispositif de restitution de messages (13) pouvant transmettre au dit système de stockage de messages (10) au moins un signal de commande sous le contrôle dudit opérateur (15) pendant la transmission d'un message, chacun desdits au moins un signaux de commande permettant de commander au dit système de stockage de messages (10) d'effectuer sur ledit message en cours de transmission une opération correspondante parmi lesdites opérations, ledit dispositif de restitution de messages (13) comportant au moins un dispositif de commande (14) permettant au dit opérateur (15) de générer lesdits au moins un signaux de commande à destination dudit système de stockage de messages (10), **caractérisé en ce que** ledit procédé comporte une étape pour tester si le message en cours de transmission est un message privé ou un message publicitaire ou urgent, et **en ce que** ledit système de stockage de messages (10) stocke en outre pour chaque message publicitaire ou urgent stocké une information représentative de la durée d'un délai minimum pour ledit message publicitaire ou urgent et n'accepte d'effectuer lesdites opérations sur ledit message publicitaire ou urgent en cours de transmission qu'après l'expiration dudit délai minimum à partir du début de la transmission dudit message publicitaire ou urgent audit dispositif de restitution de messages (13) et dans lequel au moins un desdits signaux de commande commandant audit système de stockage de messages d'effectuer au moins une desdites opérations sur ledit message publicitaire ou urgent en cours de transmission est déterminé en temps réel par ledit système de stockage de messages (10) et est transmis en temps réel par ledit système de stockage de messages (10) audit opérateur (15) via ledit dispositif de restitution de messages (13), dans lequel ledit au moins un desdits signaux de commande comprend, pour ledit message publicitaire ou urgent en cours de transmission, un signal d'accusé de réception, choisi de façon aléatoire par ledit système de stockage de messages, et transmis une fois le délai minimum écoulé, et dans lequel ledit système de stockage de messages (10) ignore les opérations autres que ledit accusé de réception dudit message publicitaire ou urgent en cours de transmission jusqu'à la réception dudit accusé de réception.

2. Procédé selon la revendication 1, dans lequel ledit système de stockage de messages (10) et ledit dispositif de restitution de messages (13) communiquent via un canal de communication (12).

3. Procédé selon la revendication 2, dans lequel ledit canal de communication (12) est une liaison radio et dans lequel ledit dispositif de restitution de messages (13) est un terminal de radiocommunication.

4. Procédé selon la revendication 2, dans lequel ledit canal de communication (12) est une liaison téléphonique filaire et dans lequel ledit dispositif de restitution de messages (13) est un poste téléphonique conventionnel.

5. Procédé selon la revendication 2, dans lequel ledit canal de communication (12) est une liaison télématique et dans lequel ledit dispositif de restitution de messages (13) est un terminal de communication télématique.

6. Procédé selon la revendication 2, dans lequel ledit canal de communication (12) est une liaison de télévision interactive et dans lequel ledit dispositif de restitution de messages (13) est un récepteur de télévision interactif.

7. Procédé selon la revendication 2, dans lequel ledit canal de communication (12) est un réseau informatique et dans lequel ledit dispositif de restitution de messages (13) est un système informatique connecté au dit réseau informatique.

8. Procédé selon la revendication 1 ou 2, dans lequel le dispositif de stockage de messages (10), le dispositif de restitution de messages (13) et le canal de communication (12) éventuel sont intégrés dans un dispositif unique tel qu'une borne interactive.

9. Procédé selon l'une quelconque des revendications précédentes, dans lequel lesdits messages stockés dans ledit système de stockage de messages (10) et transmis an dit dispositif de restitution de messages (13) comprennent au moins une partie sonore.

10. Procédé selon la revendication 9, dans lequel lesdits messages stockés dans ledit système de stockage de messages (10) et transmis au dit dispositif de restitution de messages (13) comprennent au moins une partie de message vocal.

11. Procédé selon la revendication 10, dans lequel ledit système de stockage de messages (10) est un serveur de messagerie vocale.

12. Procédé selon l'une quelconque des revendications précédentes, dans lequel lesdits messages stockés dans ledit système de stockage de messages (10) et transmis au dit dispositif de restitution de messages (13) comprennent au moins une partie composée d'un texte.

13. Procédé selon l'une quelconque des revendications précédentes, dans lequel lesdits messages stockés dans ledit système de stockage de messages (10) et transmis au dit dispositif de restitution de messages (13) comprennent au moins une image ou un ensemble d'images fixes ou animées.

14. Procédé selon l'une quelconque des revendications précédentes, dans lequel lesdits messages stockés dans ledit système de stockage de messages (10) et transmis au dit dispositif de restitution de messages (13) permettent un dialogue interactif avec l'opérateur (15).

15. Procédé selon l'une quelconque des revendications précédentes, dans lequel lesdites opérations pouvant être effectuées sur le message en cours de transmission comprennent une opération permettant la suppression du message en cours de transmission et d'au moins un autre message en une seule opération.

16. Procédé selon la revendication 1, dans lequel ledit système de stockage (10) retransmet au moins partiellement le message en cours de transmission lors de la réception d'une opération autre que l'accusé de réception.

17. Procédé selon l'une quelconque des revendications précédentes, dans lequel l'un desdits au moins un dispositifs de commande (14) présents dans ledit dispositif de restitution de messages (13) pour envoyer ledit au moins un signal de commande au dit système de stockage de messages (10) est un clavier ou un dispositif de commande (14) comportant au moins une touche.

18. Procédé selon la revendication 17, dans lequel l'un desdits au moins un signaux de commande permettant d'effectuer une opération sur un message en cours de transmission est le signal généré par l'actionnement d'une touche parmi lesdites au moins une touches présentes sur ledit clavier ou ledit dispositif de commande (14) comportant au moins une touche.

19. Procédé selon l'une quelconque des revendications précédentes, dans lequel l'un desdits au moins un dispositifs de commande présents dans ledit dispositifs de restitution de messages (13) pour envoyer ledit au moins un signal de commande au dit système de stockage de messages (10) est un microphone.

20. Procédé selon la revendication 19, dans lequel l'un desdits au moines un signaux de commande permettant d'effectuer une opération sur un message en cours de transmission est une commande vocale entrée par ledit opérateur (15) au moyen dudit microphone et transmise au dit système de stockage (10) par ledit dispositif de restitution de messages (13).

21. Procédé selon l'une quelconque des revendications précédentes, dans lequel l'un desdits au moins un dispositifs de commande présents dans ledit dispositif de restitution de messages (13) pour envoyer ledit au moins un signal de commande au dit système de stockage de messages (10) est un dispositif de reconnaissance vocale.

22. Procédé selon la revendication 21, dans lequel l'un desdits au moins un signaux de commande permettant d'effectuer une opération sur un message en cours de transmission est une commande vocale entrée par ledit opérateur (15) au moyen dudit dispositif de reconnaissance vocale.

23. Procédé selon l'une quelconque des revendications précédentes, dans lequel ledit délai minimum est de trois secondes.

24. Procédé selon l'une quelconque des revendications précédentes, dans lequel lesdits messages stockés dans ledit système de stockage de messages (10) et transmis au dit dispositif de restitution de messages (13) sont des messages à caractère publicitaire.

25. Procédé selon la revendication 1, dans lequel la durée dudit délai minimum est réduite à zéro pour certains messages.

26. Système automatisé de diffusion de messages, ledit système automatisé de diffusion de messages comportant au moins un système de stockage de messages (10) stockant des messages et un dispositif de restitution de messages (13), ledit système de stockage de messages (10) pouvant transmettre des messages stockés au dit dispositif de restitution de messages (13), ledit dispositif de restitution de messages (13) permettant la restitution en temps réel à un opérateur (15) des messages transmis par ledit système de stockage de messages (10), ledit système de stockage de messages (10) pouvant effectuer un certain nombre d'opérations sur un message en cours de transmission, ledit dispositif de restitution de messages (13) pouvant transmettre au dit système de stockage de messages (10) au moins un signal de commande sous le contrôle dudit opérateur (15) pendant la transmission d'un message, chacun desdits au moins un signaux de commande permettant de commander au dit système de stockage de messages (10) d'effectuer sur ledit message en cours de transmission une opération correspondante parmi lesdites opérations, ledit dispositif de restitution de messages (13) comportant un moins un dispositif de commande (14) permettant au dit opérateur (15) de générer lesdits au moins un signaux de commande à destination dudit système de stockage de messages (10), **caractérisé par le fait qu'**il met en oeuvre le procédé selon l'une quelconque des revendications précédentes.

## Claims

1. Interactive process for reproducing messages in an automated system for distributing messages, said automated system for distributing messages comprising at least one system for storing messages (10) storing messages and a device for reproducing messages (13), said system for storing messages (10) being adapted to transmit stored messages to said device for reproducing messages (13), said device for reproducing messages (13) permitting the reproduction in real time for an operator (15) of messages transmitted by said system for storing messages (10), said system for storing messages (10) being adapted to carry out a certain number of operations on a message in the course of transmission, said device for reproducing messages (13) being adapted to transmit to said message for storing messages (10) at least one control signal under the control of said operator (15) during the transmission of a message, each of said at least one control signals permitting controlling to said system for storing messages (10) to carry out on said message in the course of transmission a corresponding operation from among said operations, said device for reproducing messages (13) comprising at least one control device (14) permitting to said operator (15) to generate said at least one control signals destined to said system for storing messages (10), **characterized in that** said process comprises a step to test if the message in the course of transmission is a private message or an advertising or urgent message, and **in that** said system for storing messages (10) stores moreover for each stored advertising or urgent message an information representative of duration of a minimum delay for said advertising or urgent message and agrees to cary out said operations on said advertising or urgent message in the course of transmission only after expiration of said minimum delay starting from the beginning of the transmission of said advertising or urgent message to said device for reproducing messages (13) and in which at least one of said control signals ordering to said system for storing messages to carry out at least one of said operations on said advertising or urgent message in the course of transmission is determined in real time by said system for storing messages (10) and is transmitted in real time by said system for storing messages (10) to said operator (15) via said device for reproducing messages (13), in which said at least are of said control signals comprise, for said advertising or urgent message in the course of transmission, a delivery acknowledgement signal, selected randomly by said system for storing messages and transmitted once the passing of said minimum delay, and in which said system for storing messages (10) is unaware of the operations other than said delivery acknowledgement of said advertising or urgent message in the course of transmission until the reception of said delivery acknowledgement.

2. Process according to claim 1, in which said system for storing messages (10) and said device for reproducing messages (13) communicate via a communication channel (12).

3. Process according to claim 2, in which said communication channel (12) is a radio connection and in which said device for reproducing messages (13) is a radio communication terminal.

4. Process according to claim 2, in which said communication channel (12) is a telephone line connection and in which said device for reproducing messages (13) is a conventional telephone station.

5. Process according to claim 2, in which said communication channel (12) is a telematic connection and in which said device for reproducing messages (13) is a telematic communication terminal.

6. Process according to claim 2, in which said communication channel (12) is an interactive television connection and in which said device for reproducing messages (13) is an interactive television receiver.

7. Process according to claim 2, in which said communication channel (12) is a computer network and in which said device for reproducing messages (13) is a computer system connected to said computer network.

8. Process according to claim 1 or 2, in which the device for storing messages (10), the device for reproducing messages (13) and the possible communication channel (12) are integrated into a single device such as an interactive terminal.

9. Process according to any of the preceding claims, in which said messages stored in said system for storing messages (10) and transmitted to said device for reproducing messages (13) comprise at least one sonic portion.

10. Process according to claim 9, in which said messages stored in said system for storing messages (10) and transmitted to said device for reproducing messages (13) comprise at least one vocal message portion.

11. Process according to claim 10, in which said system for storing messages (10) is a vocal message server.

12. Process according to any of the preceding claims, in which said messages stored in said system for storing messages (10) and transmitted to said device for reproducing messages (13) comprise at least one portion composed of a text.

13. Process according to any of the preceding claims, in which said messages stored in said system for storing messages (10) and transmitted to said device for reproducing messages (13) comprise at least one image or an assembly of fixed or animated images.

14. Process according to any of the preceding claims, in which said messages stored in said system for storing messages (10) and transmitted to said device for reproducing messages (13) permit an interactive dialog with the operator (15).

15. Process according to any of the preceding claims, in which said operations that can be carried out on the message in the course of transmission comprise an operation permitting the deletion of the message being transmitted and of at least one other message by a single operation.

16. Process according to claim 1, in which said system for storing (10) retransmits at least partially the message in the course of transmission upon reception of an operation other than the delivery acknowledgement.

17. Process according toany of the preceding claims, in which one of said at least one control devices (14) present in said device for reproducing messages (13) to send said at least one control signal to said system for storing messages (10), is a keyboard or a control device (14) comprising at least one key.

18. Process according to claim 17, in which one of said at least one control signals permitting carrying out an operation on a message in the course of transmission is the signal generated by the actuation of a key from among said at least one keys present on said keyboard or said control device (14) comprising at least one key.

19. Process according to any of the preceding claims, in which one of said at least one control devices present in said device for reproducing messages (13) to send said at least one control signal to said system for storing messages (10), is a microphone.

20. Process according to claim 19, in which one of said at least one control signals permitting carrying out an operation on a message in the course of transmission, is a vocal command entered by said operator (15) by means of said microphone and transmitted to said system for storing (10) by said device for reproducing messages (13).

21. Process according to any of the preceding claims, in which one of said at least one control devices present in said device for reproducing messages (13) to said at least one control signal to said system for storing messages (10), is a voice recognition device.

22. Process according to claim 21, in which one of said at least one control signals permitting carrying out an operation on a message in the course of transmission is a vocal command entered by said operator (15) by means of said voice recognition device.

23. Process according to any of the preceding claims, in which said minimum delay is three seconds.

24. Process according to any of the preceding claims, in which said messages stored in said system for storing messages (10) and transmitted to said device for reproducing messages (13), are advertising messages.

25. Process according to claim 1, in which the duration of said minimum delay is reduced to zero for certain messages.

26. Automated system for the broadcasting of messages, said automated system for broadcasting messages comprising at least one system for storing messages (10) storing messages and a device for reproducing messages (13), said system for storing messages (10) being adapted to transmit stored messages to said device for reproducing messages (13), said device for reproducing messages (13) permitting the reproduction in real time to an operator (15) of messages transmitted by said system for storing messages (10), said system for storing messages (10) being adapted to carry out a certain number of operations on a message in the course of transmission, said device for reproducing messages (13) being adapted to transmit to said system for storing messages (10) at least one control signal under the control of said operator (15) during the transmission of a message, each of said at least one control signals permitting controlling the system for storage of messages (10) to carry out on said message in the course of transmission a corresponding operation from among said operations, said device for reproducing messages (13) comprising at least one control device (14) permitting said operator (15) to generate said at least one control signals destined to said system for storing messages (10), **characterized by** the fact that it uses the process according to any one of the preceding claims.

## Patentansprüche

1. Interaktives Verfahren zur Wiedergabe von Nachrichten in einem automatisierten Nachrichtenverbreitungssystem, wobei das automatisierte Nachrichtenverbreitungssystem mindestens ein Nachrichtenspeichersystem (10) zur Speicherung von Nachrichten und eine Nachrichtenwiedergabevorrichtung (13) aufweist, wobei das Nachrichtenspeichersystem (10) gespeicherte Nachrichten zu der Nachrichtenwiedergabevorrichtung (13) übertragen kann, wobei die Nachrichtenwiedergabevorrichtung (13) einen Nutzer (15) eine Wiedergabe der von dem Nachrichtenspeichersystem (10) übertragenen Nachrichten in Echtzeit ermöglicht, wobei das Nachrichtenspeichersystem (10) eine gewisse Anzahl von Operationen an einer in Übertragung befindlichen Nachricht durchführen kann, wobei die Nachrichtenwiedergabevorrichtung (13) während der Übertragung einer Nachricht unter Steuerung durch den Nutzer (15) mindestens ein Steuersignal an das Nachrichtenspeichersystem (10) übertragen kann, wobei jedes dieser mindestens ein Steuersignale es ermöglicht, dem Nachrichtenspeichersystem (10) zu befehlen, an der in Übertragung befindlichen Nachricht eine entsprechende Operation unter den genannten Operationen durchzuführen, wobei die Nachrichtenwiedergabevorrichtung (13) mindestens eine Steuervorrichtung (14) enthält, die es dem Nutzer (15) ermöglicht, die für das Nachrichtenspeichersystem (10) bestimmten mindestens ein Steuersignale zu generieren, **dadurch gekennzeichnet, dass** das Verfahren einen Schritt zum Prüfen aufweist, ob die in Übertragung befindliche Nachricht eine Privatnachricht oder eine Werbenachricht oder dringend ist, und dass das Nachrichtenspeichersystem (10) zusätzlich für jede Werbenachricht oder dringende Nachricht eine Information über die Dauer einer Mindestzeitspanne für die Werbenachricht oder dringende Nachricht speichert und die Durchführung der genannten Operationen an der in Übertragung befindlichen Werbenachricht oder dringenden Nachricht erst dann akzeptiert, wenn ab dem Beginn der Übertragung der Werbenachricht oder dringenden Nachricht an die Nachrichtenwiedergabevorrichtung die genannte Mindestzeitspanne abgelaufen ist, und in dem mindestens eines der Steuersignale, die dem Nachrichtenspeichersystem die Durchführung mindestens einer der Operationen an der in Übertragung befindlichen Werbenachricht oder dringenden Nachricht befehlen, in Echtzeit durch das Nachrichtenspeichersystem (10) bestimmt und in Echtzeit von dem Nachrichtenspeichersystem (10) über die Nachrichtenwiedergabevorrichtung (13) zum Nutzer (15) übertragen wird, wobei das mindestens eine der Steuersignale für die in Übertragung befindliche Werbenachricht oder dringende Nachricht ein Empfangsbestätigungssignal aufweist, welches aleatorisch von dem Nachrichtenspeichersystem ausgewählt und nach Ablauf der Mindestzeitspanne übertragen wird, und wobei das Nachrichtenspeichersystem andere Operationen, außer der Bestätigung des Empfangs der in Übertragung befindlichen Werbenachricht oder dringenden Nachricht ignoriert, und zwar bis zum Empfang der Empfangsbestätigung.

2. Vorrichtung nach Anspruch 1, bei der das Nachrichtenspeichersystem (10) und die Nachrichtenwiedergabevorrichtung (13) über einen Kommunikationskanal (12) kommunizieren.

3. Verfahren nach Anspruch 2, bei dem der Kommunikationskanal (12) eine Funkverbindung ist und bei dem die Nachrichtenwiedergabevorrichtung (13) ein Funkverbindungsterminal ist.

4. Verfahren nach Anspruch 2, bei dem der Kommunikationskanal (12) eine Telefonnetzverbindung ist und bei dem die Nachrichtenwiedergabevorrichtung (13) ein gewöhnlicher Telefonanschluss ist.

5. Verfahren nach Anspruch 2, bei dem der Kommunikationskanal (12) eine Telematikverbindung ist und bei dem die Nachrichtenwiedergabevorrichtung (13) ein Terminal für Telematik-Kommunikation ist.

6. Verfahren nach Anspruch 2, bei dem der Kommunikationskanal (12) eine interaktive Fernsehverbindung ist und bei dem die Nachrichtenwiedergabevorrichtung (13) ein Empfänger für interaktives Fernsehen ist.

7. Verfahren nach Anspruch 2, bei dem der Kommunikationskanal (12) ein Informatiknetz ist und bei dem die Nachrichtenwiedergabevorrichtung (13) ein mit einem Informatiknetz verbundenes Informatiksystem ist.

8. Verfahren nach Anspruch 1 oder 2, bei dem die Nachrichtenspeichervorrichtung (10), die Nachrichtenwiedergabevorrichtung (13) und gegebenenfalls der Kommunikationskanal (12) in einer einzigen Vorrichtung integriert sind, wie zum Beispiel einem interaktiven Anschluss.

9. Verfahren nach einem der vorangehenden Ansprüche, bei dem die Nachrichten, die in dem Nachrichtenspeichersystem (10) gespeichert und an die Nachrichtenwiedergabevorrichtung (13) übertragen werden, mindestens einen Ton-Teil umfassen.

10. Verfahren nach Anspruch 9, bei dem die in dem Nachrichtenspeichersystem (10) gespeicherten und zu der Nachrichtenwiedergabevorrichtung (13) übertragenen Nachrichten mindestens einen Sprachteil aufweisen.

11. Verfahren nach Anspruch 10, bei dem das Nachrichtenspeichersystem (10) ein Server für Sprachnachrichten ist.

12. Verfahren nach einem der vorangehenden Ansprüche, bei dem die in dem Nachrichtenspeichersystem (10) gespeicherten und zu der Nachrichtenwiedergabevorrichtung (13) übertragenen Nachrichten mindestens einen aus einem Text bestehenden Teil aufweisen.

13. Verfahren nach einem der vorangehenden Ansprüche, bei dem die in dem Nachrichtenspeichersystem (10) gespeicherten und an die Nachrichtenwiedergabevorrichtung (13) übertragenen Signale mindestens ein Bild oder ein Ensemble von stillen oder bewegten Bildern enthält.

14. Verfahren nach einem der vorangehenden Ansprüche, bei dem die in dem Nachrichtenspeichersystem (10) gespeicherten und an die Nachrichtenwiedergabevorrichtung (13) übertragenen Nachrichten einen interaktiven Dialog mit dem Nutzer (15) ermöglichen.

15. Verfahren nach einem der vorangehenden Ansprüche, bei dem die an der in Übertragung befindlichen Nachricht vornehmbaren Operationen eine Operation umfassen, die Löschung der in Übertragung befindlichen Nachricht und mindestens einer weiteren Nachricht in einer einzigen Operation ermöglichen.

16. Verfahren gemäß Anspruch 1, bei dem das Speichersystem (10) bei Empfang einer anderen Operation als der Empfangsbestätigung die in Übertragung befindliche Nachricht mindestens teilweise zurücküberträgt.

17. Verfahren nach einem der vorangehenden Ansprüche, bei dem eine der mindestens einen Steuervorrichtungen (14), die in der Nachrichtenwiedergabevorrichtung (13) vorhanden sind, um das mindestens eine Steuersignal an das Nachrichtenspeichersystem (10) zu schicken, eine Tastatur oder eine Steuervorrichtung (14) mit mindestens einem Berührungsfeld ist.

18. Verfahren nach Anspruch 17, bei dem von dem mindestens einen Steuersignal, welches die Durchführung einer Operation an einer in Übertragung befindlichen Nachricht ermöglicht, das Signal ist, welches durch Betätigung eines Berührfeldes von den mindestens einem Berührfeldern, die an der Tastatur oder der mindestens ein Berührfeld aufweisenden Steuervorrichtung (14) vorgesehen ist, generiert wird.

19. Verfahren nach einem der vorangehenden Ansprüche, bei dem eine von den mindestens einen Steuervorrichtungen, die in der Bildwiedergabevorrichtung (13) vorhanden sind, um das mindestens eine Steuersignal an das Nachrichtenspeichersystem (10) zu schicken, ein Mikrofon ist.

20. Vorrichtung nach Anspruch 19, bei dem von dem mindestens einen Steuersignal, die die Durchführung einer Operation an einer in Übertragung befindlichen Nachricht ermöglichen, eines ein Sprachbefehl ist, der von dem Nutzer (15) mittels des Mikrofons eingegeben und von der Nachrichtenwiedergabevorrichtung (13) an die Speichersystem (10) übertragen wird.

21. Verfahren nach einem der vorangehenden Ansprüche, bei dem eine von der mindestens einen Steuervorrichtung, die in der Nachrichtenwiedergabevorrichtung (13) enthalten sind, um das mindestens eine Steuersignal an das Nachrichtenspeichersystem (10) zu Übertragen, eine Spracherkennungsvorrichtung ist.

22. Verfahren nach Anspruch 21, bei dem eines von dem mindestens einen Befehlsignal, welche die Durchführung einer Operation an einer in Übertragung befindlichen Nachricht ermöglichen, ein Sprachbefehl ist, der von dem Nutzer (15) mittels der Spracherkennungsvorrichtung eingegeben wird.

23. Verfahren nach einem der vorangehenden Ansprüche, bei dem die Mindestzeitspanne drei Sekunden beträgt.

24. Verfahren nach einem der vorangehenden Ansprüche, bei dem die Nachrichten, die in dem Nachrichtenspeichersystem (10) gespeichert und an die Nachrichtenwiedergabevorrichtung (13) übertragen werden, Nachrichten mit Werbecharakter sind.

25. Verfahren nach Anspruch 1, bei dem die Dauer der Mindestzeitspanne für bestimmte Nachrichten auf Null reduziert wird.

26. Automatisiertes System der Verbreitung von Nachrichten, wobei das automatisierte Nachrichtenverbreitungssystem mindestens ein Nachrichtenspeichersystem (10), welches Nachrichten speichert, und eine Nachrichtenwiedergabevorrichtung (13) aufweist, wobei das Nachrichtenspeichersystem (10) die gespeicherten Nachrichten an die Nachrichtenwiedergabevorrichtung (13) übertragen kann, wobei die Nachrichtenwiedergabevorrichtung (13) es einem Nutzer (15) ermöglicht, die von dem Nachrichtenspeichersystem (10) übertragenen Nachrichten in Echtzeit wiederzugeben, wobei das Nachrichtenspeichersystem (10) eine bestimmte Anzahl von Operationen an einer in Übertragung befindlichen Nachricht durchführen kann, wobei die Nachrichtenwiedergabevorrichtung (13) während der Übertragung einer Nachricht mindestens ein Steuersignal unter der Steuerung des Nutzers (15) an das Nachrichtenspeichersystem (10) übertragen kann, wobei jedes dieser mindestens ein Befehlsignale es ermöglicht, dem Nachrichtenspeichersystem (10) zu befehlen, an der in Übertragung befindlichen Nachricht eine entsprechende Operation von den genannten Operationen durchzuführen, wobei die Nachrichtenwiedergabevorrichtung (13) mindestens eine Steuervorrichtung (14) enthält, die es dem Nutzer (15) ermöglichen, die mindestens ein Steuersignale, die für das Nachrichtenspeichersystem (10) bestimmt sind, zu generieren, **dadurch gekennzeichnet, dass** es das Verfahren gemäß einem der vorangehenden Ansprüche ausführt.
